# EUROPEAN PATENT APPLICATION

(11) **EP 1 633 145 A1**
(43) Date of publication of application: **08.03.2006**
(21) Application number: 04292128.8
(22) Date of filing: 03.09.2004
(51) Int. Cl.: H04N 7/167, G06F 12/14

(54) **Secured electronic device**

(71) Applicant: Canal + Technologies, 75906 Paris Cedex 15 (FR)
(72) Inventor: Albanèse, Laurent, 759006 Paris cedex 15 (FR); Perrine, Jérome, 75906 Paris cedex 15 (FR)
(74) Representative: Weihs, Bruno Konrad

(57) **Abstract**

A secured electronic device comprises a microprocessor (303) and a memory (302), the microprocessor allowing to process incoming data to encrypt and store the incoming data into the memory. The secured electronic device further comprises a cryptological hardware (304) that receives an instruction from the microprocessor to encrypt the incoming data, encrypts the incoming data upon receiving the instruction to encrypt and stores the encrypted data into the memory.

## Description

### Background of Invention

### Field of the Invention

The invention relates generally to secured storage of data.

### Background Art

Secured storage of data is well known in various fields where access to data needs to be restricted for confidentiality or commercial reasons. Secured storage of data is for example essential in the field of digital pay television systems.

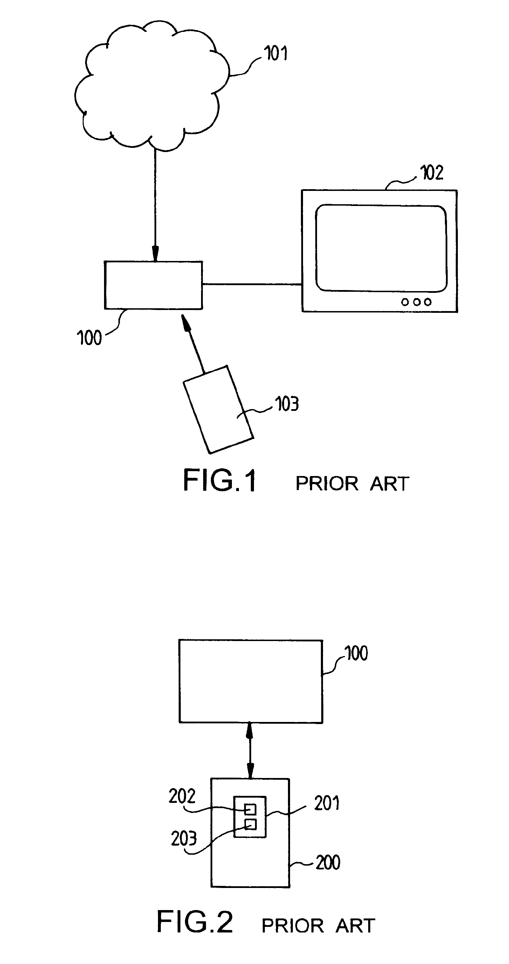

Fig. 1 shows an example of a digital television receiver set-up as used by a subscriber of digital television services. A decoder 100 receives digital television signals from a network 101 and processes the digital television signals for display on a television terminal 102. A remote control 103 allows the subscriber to control the decoder 100 to select services offered by the decoder such as for example the display of a particular audio-visual program broadcast among the digital television signals or an interactive user application run inside the decoder.

The digital television signals may be encrypted for commercial reasons in order to only allow an authorized subscriber that has paid a subscription fee to access audio-visual programs or any other content transmitted by means of the digital television signals. The authorized subscriber possesses information and hardware required to decrypt the digital television signals.

Fig. 2 illustrates an example of hardware that may be used to decrypt encrypted digital television signals. A smartcard 200 that carries a chip 201 is connected to an appropriate hardware interface (not shown in Fig. 2) of the decoder 100. This allows the decoder 100 to interact with the chip 201 by either sending data to or receiving data from the chip 201. The chip 201 generally comprises at least a microprocessor 202 and one or more types of memory 203 such as for example Random Access Memory (RAM), Read Only Memory (ROM), Electrical Erasable Programmable Read Only Memory (EEPROM) or flash memory. The memory allows to store data received from the decoder 100 or data written in the memory 103 during a configuration process at manufacturing or customization of the chip 201. The data may be written in the memory 203 using the microprocessor 202. The data stored in the memory 203 may for example be encryption and/or decryption keys, subscriber identification data, access rights... The data stored in the memory 203 may be stored without encryption in order to be used by anyone having access to the memory. In case the data stored in the memory 203 needs to be secured it may be encrypted using for example a decoder encryption key. In particular the data stored in the memory 203 may be used with the decoder to allow the decryption of the digital television signals and access determined services. Hence the smartcard 200 contains valuable information that the subscriber has acquired by paying his subscription and that allows to access services transmitted by means of the encrypted digital television signals. It would be damageable for the operator of the digital television signals if the data stored on the smartcard 200 is copied or cloned in an illegal smartcard and used by non paying viewers.

### Summary of Invention

In a first aspect the invention provides a secured electronic device that comprises a microprocessor and a memory, the microprocessor allowing to process incoming data to encrypt and store the incoming data into the memory. The secured electronic device further comprises a cryptological hardware that receives an instruction from the microprocessor to encrypt the incoming data, encrypts the incoming data upon receiving the instruction to encrypt and stores the encrypted data into the memory.

In a first preferred embodiment of the secured electronic device, the cryptological hardware allows to process an instruction from the microprocessor for reading encrypted data from the memory, reads the encrypted data from the memory upon receiving the instruction for reading, decrypts the encrypted data and outputs the decrypted data to the microprocessor.

In a second aspect, the invention provides a digital pay television network having a plurality of subscribers, each subscriber using at least one electronic device to access a service received through the digital pay television network. Each electronic device comprises a microprocessor and a memory, the microprocessor allowing to process incoming data to encrypt and store the incoming data into the memory. At least each electronic device further comprises a cryptological hardware that receives an instruction from the microprocessor to encrypt the incoming data, encrypts the incoming data upon receiving the instruction to encrypt and stores the encrypted data into the memory.

In a second preferred embodiment of the digital pay television network, the cryptological hardware allows to process an instruction from the microprocessor for reading encrypted data from the memory, reads the encrypted data from the memory upon receiving the instruction for reading, decrypts the encrypted data and outputs the decrypted data to the microprocessor.

In a third preferred embodiment, among at least two electronic devices, each cryptographical hardware of the respective electronic device is of a same type, and each electronic device respectively comprises a specific parameter that is fed to the cryptological hardware of the respective electronic device to render the encryption of the cryptographical hardware unique to the respective electronic device.

In a fourth preferred embodiment, among at least two electronic devices, each cryptographical hardware of the respective electronic device is of a different type that renders the encryption of the cryptographical hardware unique to the respective electronic device.

Other aspects and advantages of the invention will be apparent from the following description and the appended claims.

### Brief Description of Drawings

Fig. 1 illustrates a television receiver set up according to prior art;

Fig. 2 illustrates a digital television decoder and a smartcard according to prior art;

Fig. 3 illustrates an example embodiment of a secured electronic device according to the invention;

Fig. 4 and 5 each illustrate a plurality of secured electronic devices according to examples of the invention.

### Detailed Description

The invention provides a cryptological hardware configuration that allows to protect data stored in electronic devices, e.g. data stored in a chip of a smartcard or data stored in the memory of a mobile communication terminal. The invention provides that data stored in the electronic device is encrypted in a unique way such that the data becomes useless if copied or cloned in a similar but distinct electronic device. The invention achieves this by encrypting the data in the electronic device using a cryptological hardware that is uniquely configured to the electronic device.

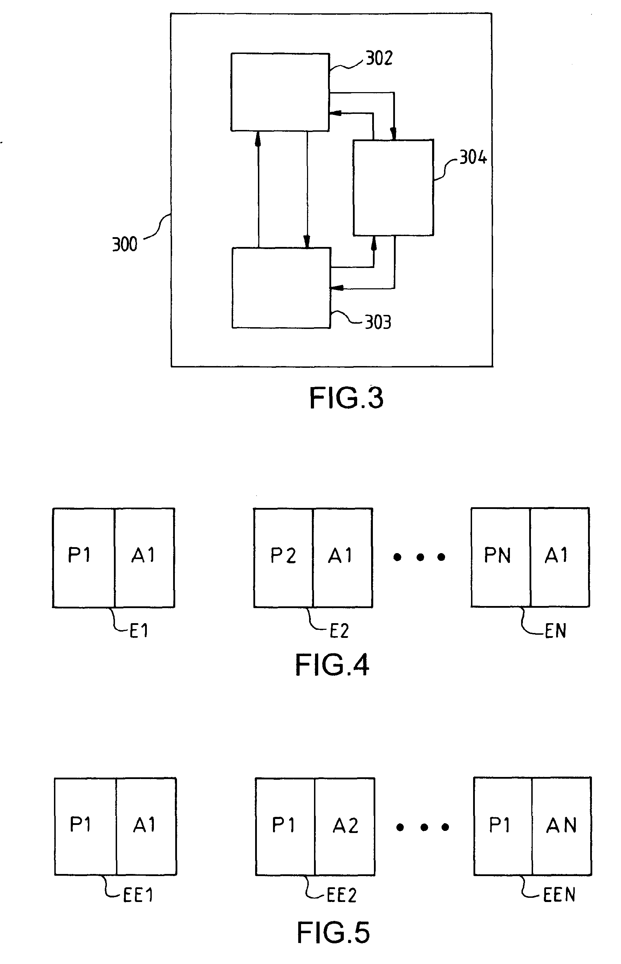

Fig. 3 illustrates a first example embodiment of a cryptological hardware configuration according to the invention. An electronic device 300 comprises a microprocessor 303 and a memory 302. The electronic device 300 may for example be a smartcard, and more precisely a chip embedded on a smartcard. The electronic device 300 may also be a printed circuit integrated in a mobile or non mobile device such as a cellular phone, an electronic key, a game computer, a computer...

Preferably the memory 302 is an EEPROM type memory. The EEPROM type memory allows to store data and data remains stored even if the power supply of the EEPROM is interrupted. The EEPROM in a digital pay television smartcard chip may be used for storing keys, periodically changing information, conditional access data, account information, electronic money etc...

The electronic device 300 further comprises a cryptological hardware 304 that may exchange information for reading and for writing with either one of the microprocessor 303 or the memory 302. The cryptological hardware 304 is used to encrypt data stored in the memory 302. Data to be stored in the memory 302 arrives at the microprocessor 303, which on turn sends instructions to the cryptological hardware 304 to encrypt the data and to store the encrypted data in the memory 302.

The result of the encryption as executed by the cryptological hardware 304 may depend on a manner in which the cryptological hardware 304 operates and on an encryption parameter provided to and used by the cryptological hardware 304. The encryption parameter may for example be an encryption key. The manner in which the cryptological hardware 304 operates may for example be characterized by an encryption algorithm.

Fig. 4 schematically illustrates a preferred embodiment wherein a plurality of electronic devices E1, E2, ... EN, N being an integer, according to the invention are shown. Each electronic device E1, E2, ... EN comprises a microprocessor, a memory and a cryptological hardware, which have been omitted from Fig. 4 for better readability. Each electronic device E1, E2, ... EN comprises a cryptological hardware of a same determined type referenced A1. In other words, each cryptological hardware of the type A1 operates in the same manner independently of the electronic device in which it is comprised. However each electronic device E1, E2, ... EN comprises its own respective specific parameter P1, P2, ... PN that is fed to the cryptological hardware such that the encryption used in each electronic device E1, E2, ... EN is unique to each one of the respective electronic devices E1, E2, ... EN.

Fig. 5 schematically illustrates a preferred embodiment wherein a plurality of electronic devices EE1, EE2, ... EEN according to the invention are shown using a similar terminology for the parameters P1 and types of cryptological hardware A1, A2, ...AN as is explained for Fig. 4. In this preferred embodiment, each electronic device EE1, EE2, ...EEN comprises a cryptological hardware of a different respective type A1, A2, ...AN using a same parameter P1 such that the encryption used in each electronic device EE1, EE2, ... EEN is unique to each one of the respective electronic devices EE1, EE2, ... EEN. It is understood that the use of a parameter such as P 1 is an option. In this preferred embodiment it is sufficient to have a different type of cryptological hardware for each electronic device.

Coming back to Fig. 3, the illustrated embodiment allows the microprocessor 303 to directly access the memory 302 and hence to directly read encrypted data or any other data stored in the memory 302. The microprocessor 303 may also directly write data into the memory 302. It is understood that data written into the memory 302 needs to be appropriately encrypted to be later read when using the cryptological hardware 304.

In case it is necessary to read encrypted data from the memory 302 and to decrypt the encrypted data, the CPU sends instructions to the cryptological hardware 304, which reads the encrypted data from the memory 302 and transmits the obtained decrypted data to the microprocessor 303.

In a further preferred embodiment, the microprocessor 303 may only access the memory 302 through the cryptological device 304. This means that the communication arrows directly linking the microprocessor 303 and the memory 302 in Fig. 3 are omitted.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A secured electronic device comprising
a microprocessor (303),
a memory (302), the microprocessor allowing to process incoming data to encrypt and store the incoming data into the memory,
the secured electronic device being **characterized in that** it further comprises
a cryptological hardware (304) that receives an instruction from the microprocessor to encrypt the incoming data, encrypts the incoming data upon receiving the instruction to encrypt and stores the encrypted data into the memory.

2. The secured electronic device of claim 1, wherein the cryptological hardware (304) allows to process an instruction from the microprocessor for reading encrypted data from the memory, reads the encrypted data from the memory upon receiving the instruction for reading, decrypts the encrypted data and outputs the decrypted data to the microprocessor.

3. A digital pay television network having a plurality of subscribers, each subscriber using at least one electronic device to access a service received through the digital pay television network, each electronic device comprising
a microprocessor (303),
a memory (302), the microprocessor allowing to process incoming data to encrypt and store the incoming data into the memory,
the digital pay television network being **characterized in that** at least each electronic device further comprises
a cryptological hardware (304) that receives an instruction from the microprocessor to encrypt the incoming data, encrypts the incoming data upon receiving the instruction to encrypt and stores the encrypted data into the memory.

4. The digital pay television network of claim 3, wherein the cryptological hardware (304) allows to process an instruction from the microprocessor for reading encrypted data from the memory, reads the encrypted data from the memory upon receiving the instruction for reading, decrypts the encrypted data and outputs the decrypted data to the microprocessor.

5. The digital pay television network of claim 3 or 4, wherein among at least two electronic devices (E1, E2, ...EN), each cryptographical hardware of the respective electronic device is of a same type (A1), and each electronic device respectively comprises a specific parameter (P1, P2, ..., PN) that is fed to the cryptological hardware of the respective electronic device to render the encryption of the cryptographical hardware unique to the respective electronic device.

6. The digital pay television network of claim 3 or 4, wherein among at least two electronic devices (EE1, EE2, ... EEN), each cryptographical hardware of the respective electronic device is of a different type (A1, A2, ... AN) that renders the encryption of the cryptographical hardware unique to the respective electronic device.
